# EUROPEAN PATENT APPLICATION

(11) **EP 4 310 318 A1**
(43) Date of publication of application: **24.01.2024**
(21) Application number: 22186137.0
(22) Date of filing: 21.07.2022
(51) Int. Cl.: F03D 1/06

(54) **WIND TURBINE ROTOR BLADE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention describes a wind turbine rotor blade (20) comprising an inboard region and an outboard region including a spanwise section (20_{UAM}) associated with the development of an unstable aeroelastic mode (UAM). The inventive rotor blade is characterized by a leading-edge corrective mass (1) arranged within the spanwise section (20_{UAM}), which leading-edge corrective mass (1) is adapted to move the centre of mass (22) of the spanwise section (20_{UAM}) towards the leading edge (20_{LE}) in order to suppress the development of an unstable aeroelastic mode (UAM). The invention further describes a method of manufacturing a wind turbine rotor blade (20).

## Description

### Background

The power output of a wind turbine depends to a large extent on the rotational velocity of the aerodynamic rotor, i.e. the rotor blades mounted to the hub. A "large" wind turbine with a rated power output in the order of 15 MW can have rotor blades with a length in the order of 100 m or more. The velocity at any point along a rotor blade depends on distance from the hub, with the outermost tip end moving at the greatest speed. For a particular wind turbine type, the relationship between various parameters such as achievable power output, allowable rotor speed etc., can be expressed as an "operational envelope", and the wind turbine is controlled within the bounds of this operational envelope.

During design of wind turbine rotor blades, consideration must be given to aeroelastic stability in order to avoid unstable aeroelastic modes such as linear flutter, stall-induced vibrations, whirl flutter, etc. Flutter modes are particularly problematic, since unrestrained vibration in a wind turbine rotor blade can lead to serious structural damage and significant repair costs.

During design and testing of a wind turbine rotor blade, an optimal combination of geometry, mass, stiffness and aerodynamic profile is identified and the stability limit for that rotor blade design is determined, preferably under consideration of aeroservoelastic aspects. The stability limit for rotor blades of a wind turbine can be understood as the maximum rotor speed allowable under a combination of parameters (allowable tip speed, wind speed, pitch angle, generator torque, control response etc.) above which aeroelastic instabilities can be expected to develop. For example, aeroelastic modal analysis of a rotor blade design for a certain wind turbine type can identify a rotor speed or rpm value at which an aeroelastic mode can become negatively damped, leading to flutter.

However, as wind turbine size and rotor blade length continue to increase, the stability limit approaches the operational envelope, i.e. aeroelastic instabilities become more likely during normal operation if corrective design measures are not implemented. The damping of an aeroelastic mode depends on momentary operating parameters such as pitch angle, rpm, wind speed, etc. With positive damping, vibrations can be attenuated, but rapid attenuation generally comes at a cost of increased rotor blade mass. Although positive damping is generally desired, if this is achieved through the addition of significant amounts of material in the rotor blades, such positive damping can come at the cost of adversely affecting the dynamic loads on the wind turbine.

However, insufficient or negative damping can lead to rapidly increasing amplitude of vibration, leading to structural damage or even catastrophic failure of the rotor blade. Insufficient positive damping can also lead to fatigue damage, structural faults etc. Additional external damping sources such as a tuned mass damper have shown potential to supress aeroelastic instabilities, but such damping solutions generally result in added cost, complexity, and mass.

Various techniques have been proposed to avoid unstable aeroelastic modes of wind turbine rotor blades. For example, the shape and structure of a rotor blade can be tailored to ensure sufficient aerodynamic damping in the critical modes. However, the high uncertainty associated with modelling of standstill vibrations and flutter means that generous safety margins are required, i.e. additional mass must be added to the body of the rotor blade in regions in which aeroelastic stability is highly sensitive to the airfoil shape. It has also been proposed to provide additional damping mechanisms to help minimize the largest amplitude of an unstable aeroelastic mode. However, the known solutions generally involve some modification in the construction of the outboard rotor blade region, for example by altering the position of the shear web along a critical section of the rotor blade. Because these modifications are generally associated with a mass-moment penalty, the edgewise fatigue loading will increase, since this is primarily driven by cyclic gravity loading as the rotor blade passes through a complete revolution. Furthermore, any additional mass incorporated in an outboard rotor blade region has the effect of increasing the mass moment of the rotor blade, and the length of the moment arm is proportional to the distance of the additional mass from the hub. The higher mass moment, in turn, increases fatigue loading (due to the downward pull of gravity during each revolution of the rotor rotation), and can entail further cost-intensive structural modification of the rotor blade and hub components to account for this increased loading.

In an alternative approach, sensor data can be evaluated by the wind turbine controller to estimate or measure rotor blade vibrations, and the control algorithm can respond by curtailing the wind turbine power output if an aeroelastic instability is detected. The occurrence of potentially problematic rotor blade vibrations may compel the wind turbine operator to shut down the wind turbine as a preventive measure in order to carry out an inspection to establish the underlying cause. However, output power curtailment and shutdown result in loss of revenue. Therefore, this approach is unattractive from the point of view of the wind turbine operator.

It is therefore an object of the invention to provide an improved rotor blade design that overcomes the problems outlined above.

This object is achieved by the claimed wind turbine rotor blade; by the claimed wind turbine; and by the claimed method of manufacturing a wind turbine rotor blade.

### Description

According to the invention, the wind turbine rotor blade comprises an inboard region for connection to a wind turbine hub and an outboard region with an airfoil shape. The outboard region of a wind turbine rotor blade is generally understood to comprise at least the outer 50% of the rotor blade and extends to the outermost tip of the rotor blade. In the context of the invention, the outboard region is understood to include at least one spanwise section associated with the development of an unstable aeroelastic mode, i.e. a spanwise section that - without corrective measures - would be likely to exhibit significant participation in an unstable aeroelastic mode. The inventive rotor blade comprises a leading-edge corrective mass arranged within the spanwise section. The leading-edge corrective mass is adapted to shift the centre of mass of that spanwise section towards the leading edge.

The result of shifting the centre of mass towards the leading edge is to obtain a more favourable dynamic mass balancing of that spanwise section, and suppressing the development of an unstable aeroelastic mode.

During certain operating conditions, the effect of the leading-edge corrective mass is to create a favourable flap-torsion coupling, i.e. when the airfoil in that spanwise section accelerates "upward" (in the flapwise direction) the inertia of the corrective mass results in a "downward" pitching moment. This can be described as a "nose-down" pitching moment since the leading edge is at the front of the airfoil.

In this way, any acceleration of the airfoil in the flapwise or edgewise direction results in a torsional moment that has a corrective influence on the phase and amplitude of the targeted (i.e. the undesirable) aeroelastic mode, thereby providing increased aerodynamic damping. The leading-edge corrective mass essentially provides dynamic mass balancing in that spanwise section, by developing a corrective torsional moment from the airfoil's flapwise acceleration. This favourable flap-torsion coupling effectively counteracts any tendency of the rotor blade to twist in a way that would amplify the airfoil's flapwise deflection, i.e. the inventive rotor blade discourages development of an undesirable unstable aeroelastic mode. The "targeted aeroelastic mode" shall be understood as the unstable aeroelastic mode that is effectively suppressed by the design of the inventive rotor blade.

In the context of the invention, the position of the moved or modified centre of mass is relative to the position of the centre of mass of the unmodified spanwise section. In other words, the position of the centre of mass of the unmodified spanwise section is used as a reference position, relative to which the position of the shifted centre of mass is defined.

An advantage of the inventive wind turbine rotor blade is that an undesirable unstable aeroelastic mode can be prevented from developing during specific operating conditions (i.e. an unfavourable combination of rpm, wind speed and pitch angle) which would lead to development of such an unstable aeroelastic mode in an unmodified rotor blade of the same type. As explained in the introduction, an undesirable unstable aeroelastic mode can be edgewise flutter, linear flutter, stall-induced vibrations, etc. The development of such undesirable modes is actively supressed by the inventive wind turbine rotor blade, allowing it to operate in conditions that would potentially damage an equivalent rotor blade. By suppressing the development of unstable aeroelastic modes, the inventive rotor blade is less prone to fatigue damage and the lifetime of the rotor blade can be extended. A wind turbine equipped with the inventive rotor blades can be operated without curtailment in conditions that would lead to fatigue and/or structural damage in conventional rotor blades.

Furthermore, since the operating conditions associated with development of an unstable aeroelastic mode generally involve a high rotor speed and a correspondingly high power output, suppression or mitigation of unstable aeroelastic modes (that would otherwise develop above the rotor blade's stability limit) can allow the wind turbine to continue operating, i.e. it is not necessary to reduce the rotor speed to avoid flutter, so that curtailment of power output can be avoided. In this way, the inventive rotor blade avoids loss of revenue associated with curtailment during an unstable aeroelastic mode.

A further advantage of the inventive rotor blade is that it can be constructed with less material than an equivalent rotor blade without the leading-edge corrective mass, since the presence of the corrective mass allows the inventive rotor blade to be designed without the otherwise necessary safety margin (e.g. additional material) required by conventional rotor blades to avoid development of unstable aeroelastic modes.

According to the invention, a wind turbine comprises a number of such rotor blades, and benefits from an increased stability limit, an increase in revenue, and lowered operating costs owing to the increased lifetime of the rotor blades.

The invention also describes a method of manufacturing a wind turbine rotor blade. The method comprises the steps of identifying, in an outboard region of the rotor blade, a spanwise section associated with the development of an unstable aeroelastic mode; determining the properties (e.g. weight, density, size) and position of a leading-edge corrective mass that will suppress the development of an unstable aeroelastic mode in that spanwise section; providing such a leading-edge corrective mass; and arranging the leading-edge corrective mass within that spanwise section. The spanwise section can be identified on the basis of simulations, for example, prior to the moulding stage of the manufacturing procedure. The leading-edge corrective mass can be installed during the layup procedure, for example, or after the rotor blade has been removed from the mould.

The steps of augmenting a rotor blade with a leading-edge corrective mass can easily be incorporated in a manufacturing procedure, for example at the composite layup stage or in a post-curing stage, as will be explained below. The performance benefits of the inventive rotor blade can therefore be achieved without significant additional cost or effort.

Particularly advantageous embodiments and features of the invention are given by the dependent claims, as revealed in the following description. Features of different claim categories may be combined as appropriate to give further embodiments not described herein.

In the following, it may be assumed that a wind turbine is a horizontal-axis wind turbine with (usually three) rotor blades mounted to a hub at the front of a nacelle, mounted on top of a tower. Such wind turbines are widespread, both onshore and offshore. Any reference herein to a "large wind turbine" shall be understood to mean a wind turbine with a rated power output in the order of 6 MW, and with a rotor diameter in the order of 130 m or more; any reference to a "long rotor blade" shall be understood to mean a rotor blade with a length in the order of 65 m or more.

A corrective mass may be referred to in the following as a "ballast mass", since the purpose of the corrective mass is to adjust the centre of mass of the airfoil in that section. The expression "centre of mass" may be abbreviated to CoM herein.

The invention is based on the observation that a small amount of added aeroelastic damping has the potential to reduce large edgewise loads and fatigue loads. For example, in the case of a long rotor blade (e.g. in the order of 50 m or more), adding a leading-edge corrective mass that increases the rotor blade mass moment by only 1.5% can be enough to reduce extreme edgewise loading by about 10% and to reduce fatigue loading by about 15%. This damping effect can be sufficient to maintain stable aeroelastic modes within the entire operational envelope of a wind turbine equipped with such rotor blades.

In a preferred embodiment of the invention, a leading-edge corrective mass is arranged at the exterior of the rotor blade, i.e. outside the main body of the rotor blade. In such an embodiment, the ballast mass may be regarded as an external fairing and can be mounted to the rotor blade using an appropriate mounting structure. Such an embodiment may be preferred when the exterior assembly is able to withstand the weather conditions prevailing at the wind turbine installation site.

A corrective mass can be made of any suitable material or combination of materials in order to achieve a ballast mass of a suitable size and form. Preferably, a ballast mass comprises any material with a density of at least 10 g/cm³. For example, a ballast mass may comprise a high-density metal such as lead (Pb), whose density exceeds 11 g/cm³ and/or tungsten (W), whose density exceeds 19 g/cm³. Alternatively, a lighter material may be used, for example clay, granitic rock etc., with a density in the order of 2.2 g/cm³.

In a further preferred embodiment of the invention, a leading-edge corrective mass is bonded to an outer surface of the rotor blade. For example, after completion of the moulding, curing and finishing stages, a leading-edge corrective mass can be attached to the rotor blade airfoil in a spanwise section that is associated with the development of unstable aeroelastic modes. In one approach, a corrective mass comprises one or more curved sheets of a suitably dense and heavy material are secured about the leading edge in that spanwise section. The size and weight of the corrective mass are chosen to shift or offset the CoM of that spanwise section towards the leading edge. Such a corrective mass can be applied to retrofit an already operational rotor blade with the aim of raising its stability limit, reducing fatigue and increasing revenue. Preferably, the ballast mass has a shape that augments the airfoil shape in that spanwise section, i.e. the thickness of the ballast mass is greatest over the airfoil leading edge, and becomes progressively thinner as the ballast mass curves about the leading edge onto the pressure side and onto the suction side of the airfoil.

A ballast mass at the exterior of the rotor blade is preferably protected from exposure to the elements. Therefore, in a preferred embodiment of the invention, a protective cover is applied onto the leading-edge corrective mass. For example, if the leading-edge corrective mass is realised as a curved body arranged over the curved leading edge, the protective cover can be a leading-edge protector (LEP) of that rotor blade. An LEP is generally required to protect the leading edge of a wind turbine rotor blade from impact damage, for example from hail, sand or other bodies.

In a preferred embodiment of the invention, a leading-edge corrective mass is embedded in the rotor blade body, for example during a composite layup stage during manufacture of the rotor blade. Here also, the ballast mass may be in the form of one or more curved sheets of a heavy and dense material such as lead. By incorporating the ballast mass in the rotor blade body, it is not necessary to provide corrosion protection. Such an embodiment may be preferred if the weather conditions prevalent at the installation site are extreme.

The design of a wind turbine rotor blade generally involves a design phase in which the structural parameters of the rotor blade are established. A prototype rotor blade is then manufactured and thoroughly tested. Several design and test iterations may be required in order to fulfil the manufacturer's requirements regarding structural stability and lifetime. According to the invention, the rotor blade can be developed by testing a prototype on an already installed wind turbine. During a test procedure, it is desirable to cover as many "real life" situations as possible in order to evaluate the performance of the prototype rotor blade. Initially, the prototype rotor blade may or may not include a leading-edge corrective mass.

As explained above, different unstable aeroelastic modes can develop under different sets of conditions, so that while several parameters may remain constant (e.g. pitch angle and rpm), another parameter may vary (e.g. wind speed), resulting in the development of an unstable aeroelastic mode. However, the wind conditions associated with unstable aeroelastic modes may not naturally occur during a test procedure. Therefore, to emulate the conditions that would encourage the development of an unstable aeroelastic mode, a ballast mass is preferably attached downwind or aft of the trailing edge, along a suitable spanwise section of the rotor blade, in order to alter the dynamic aeroelastic properties of the rotor blade during the test sequence. The effect of the trailing edge ballast mass is to induce an unstable aeroelastic mode in the prototype rotor blade. In this way, the spanwise section of the prototype rotor blade most susceptible to the development of an unstable aeroelastic mode can be identified, i.e. the trailing-edge ballast mass can assist in collecting informative data regarding the conditions under which unstable aeroelastic modes are likely to develop for that rotor blade design.

A trailing-edge corrective mass can be in the form of a wedge arranged over the trailing edge in a spanwise section of the rotor blade. Alternatively or in addition, a trailing-edge corrective mass can be attached to the trailing edge end of a clamp arranged about the airfoil. The trailing edge ballast mass is preferably dimensioned to ensure that the test sequence remains within safe operating modes at all times.

A series of tests can be carried out for a number of different trailing-edge corrective masses to cover a wider range of simulated conditions. Similarly, a series of tests can be carried out with a trailing-edge corrective mass positioned at different locations in the outboard region of the rotor blade to cover a wider range of simulated conditions. A trailing-edge corrective mass can be deployed without any leading-edge corrective mass in an early design stage, for example using an instance of a rotor blade type already being deployed in existing wind turbine installations.

With the information collected from the test procedures, the properties of a corrective leading-edge ballast mass can be determined, and a suitable leading-edge corrective mass can then be constructed and attached to the specimen rotor blade in the identified spanwise section. Equally, information collected from test procedures can allow an analysis model to be validated with greater confidence. The wind turbine is again operated to duplicate the previously simulated conditions, with the aim of validating the effect of the leading-edge corrective mass on the prototype rotor blade. Once the physical properties and position of a promising leading-edge corrective mass have been identified for that rotor blade type, production of the rotor blade series can commence.

During simulations of a model of the inventive rotor blade, the inventors have observed that even only a slight shift in CoM towards the leading edge in a critical spanwise section can raise the stability limit or upper rotational speed threshold by an amount in the order of 10%, compared to a prior art wind turbine rotor blade. This is a significant increase in upper rotational speed threshold, allowing the inventive wind turbine to be safely operated in conditions that would require preventive curtailment of a wind turbine equipped with prior art rotor blades.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 and Figure 2 illustrate an exemplary embodiment of the inventive rotor blade;
Figure 3 and Figure 4 illustrate a further exemplary embodiment of the inventive rotor blade;
Figure 5 and Figure 6 illustrate a prototype development stage;
Figure 7 and Figure 8 illustrate a further exemplary embodiment of the inventive rotor blade;
Figure 9 illustrates the behaviour of the inventive rotor blade during an unstable aeroelastic mode;
Figure 10 shows curves of rotor blade rpm against time;
Figure 11 shows a prior art rotor blade.

In the diagrams, like numbers refer to like objects throughout. Objects in the diagrams are not necessarily drawn to scale.

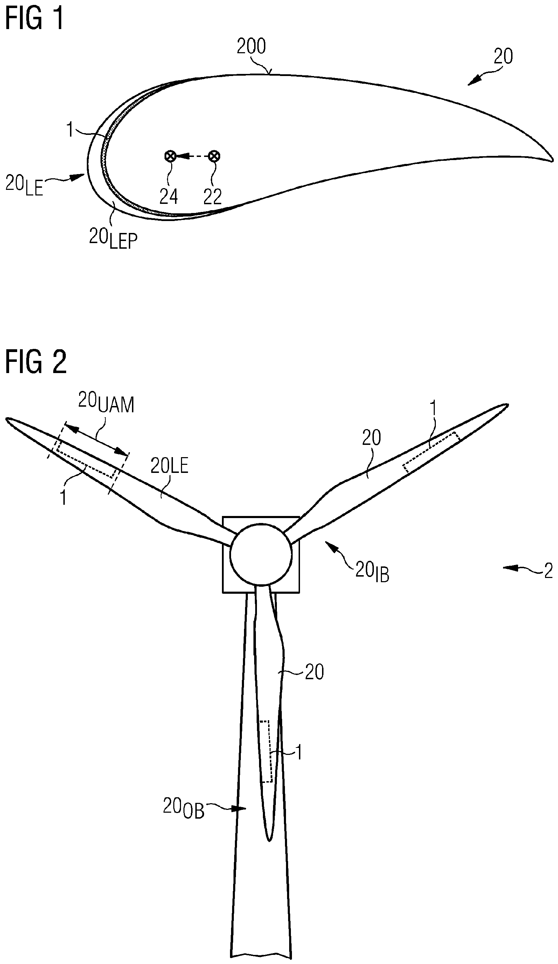

Figure 1 and Figure 2 illustrate an exemplary embodiment of the inventive wind turbine rotor blade 20. Figure 1 shows the rotor blade in cross section, while Figure 2 shows the rotor blade 20 mounted to the hub of a wind turbine 2. As indicated in Figure 1, a leading-edge corrective mass 1 is provided at a position offset from the centre of mass (CoM) of the airfoil, in the direction of the leading edge 20LE. The leading-edge corrective mass 1 is added in a critical section 20_{UAM} as indicted in Figure 1. As explained above, a critical section 20_{UAM} can be any outboard section of the rotor blade that is most prone to unstable aeroelastic modes such as edgewise flutter, whirl flutter, etc. A leading-edge corrective mass 1 can be realised as a curved sheet of a heavy material such as lead, tungsten etc., shaped to fit over the surface 200 about the curved leading edge 20LE of the rotor blade 20. One or more such heavy curved bodies may be bonded or otherwise applied to the leading edge 20LE within the critical section 20_{UAM} and a protective cover 20_{LEP} can be applied over the corrective mass 1. The effect of a leading-edge corrective mass 1 is to shift the CoM 22 forward, i.e. towards the leading edge 20LE as indicated by the arrow. The combined effect of slightly increasing the total mass of the airfoil in that critical section 20_{UAM} and obtaining a new or offset CoM 24 (in that spanwise section 20_{UAM}) is to reduce or eliminate the likelihood of unstable aeroelastic modes developing. In other words, the wind turbine can be operated without any need to reduce the rotor speed (i.e. to curtail the output power) even during an unfavourable combination of operating parameters that would lead to the development of an unstable aeroelastic mode for an equivalent conventional rotor blade, i.e. a rotor blade without the added leading-edge corrective mass 1.

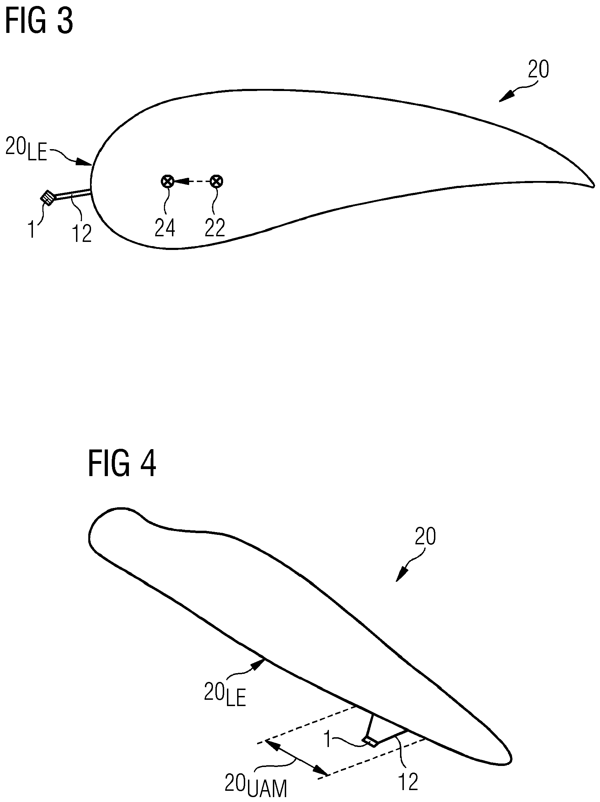

Figure 3 and Figure 4 illustrate a further exemplary embodiment of the inventive wind turbine rotor blade 20.

Figure 3 shows the rotor blade in cross section, while Figure 4 is an elevation view of the rotor blade 20.

As indicated in Figure 3, a leading-edge corrective mass 1 is provided at an external location, upwind of the leading edge 20LE, within the critical section 20_{UAM}. The ballast mass 1 is mounted to the rotor blade 20 by means of a robust framework 12. Here also, the effect of the leading-edge corrective mass 1 is to shift the CoM 22 forward as indicated by the arrow, i.e. to obtain an offset centre of mass CoM 24 that is closer to the leading edge 20LE.

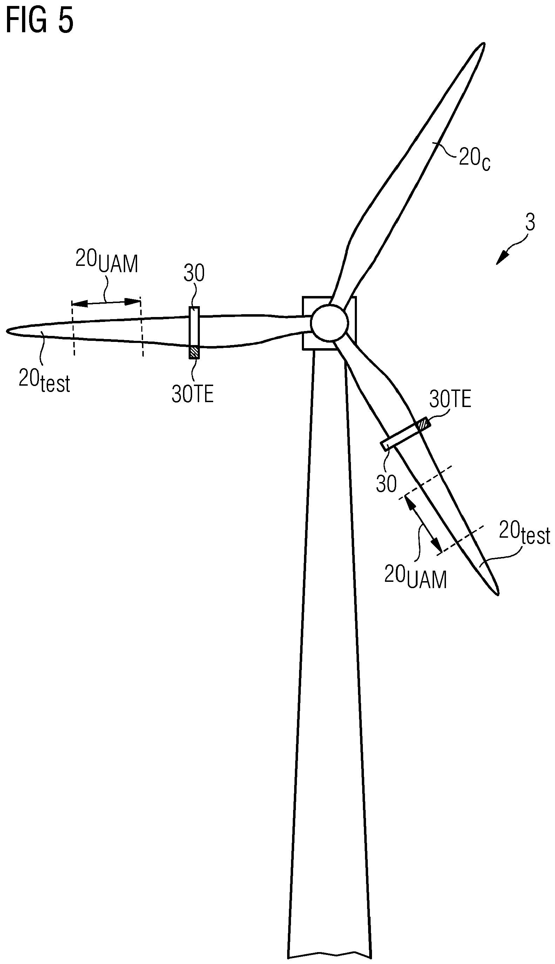

Figure 5 illustrates a test procedure in which prototype rotor blades 20test are mounted on an already installed wind turbine. In order to emulate as many "real life" situations as possible, each prototype rotor blades 20test is augmented by a blade clamp 30 with a trailing-edge ballast mass 30TE. In this exemplary embodiment, the blade clamps 30 are positioned at different spanwise sections of the specimen rotor blades 20test in order to emulate a wider range of operating conditions. Alternatively or in addition, each blade clamp 30 can have a different trailing-edge ballast mass 30TE. Initially, a prototype rotor blade 20test may or may not include a leading-edge corrective mass. As explained above, the effect of the trailing edge ballast mass 30TE is to encourage the development of an unstable aeroelastic mode in the prototype rotor blade 20test. This allows the spanwise section 20_{UAM} that is most susceptible to the development of an unstable aeroelastic mode to be identified. The behaviour of a "control" rotor blade 20c, e.g. a prototype rotor blade without any corrective mass or a prior art rotor blade as described in the introduction, may be observed during the test procedure.

When an unstable aeroelastic mode is successfully emulated, the nature of the oscillations in the prototype rotor blades 20test can be observed and evaluated in order to identify the properties of a leading-edge corrective mass required to suppress or damp the oscillations. With information collected from sensors and observations during a test procedure, an optimum arrangement can be identified for the leading-edge corrective mass in the critical spanwise section 20_{UAM}, so that a favourably high stability limit can be achieved for that type of rotor blade when installed on a wind turbine.

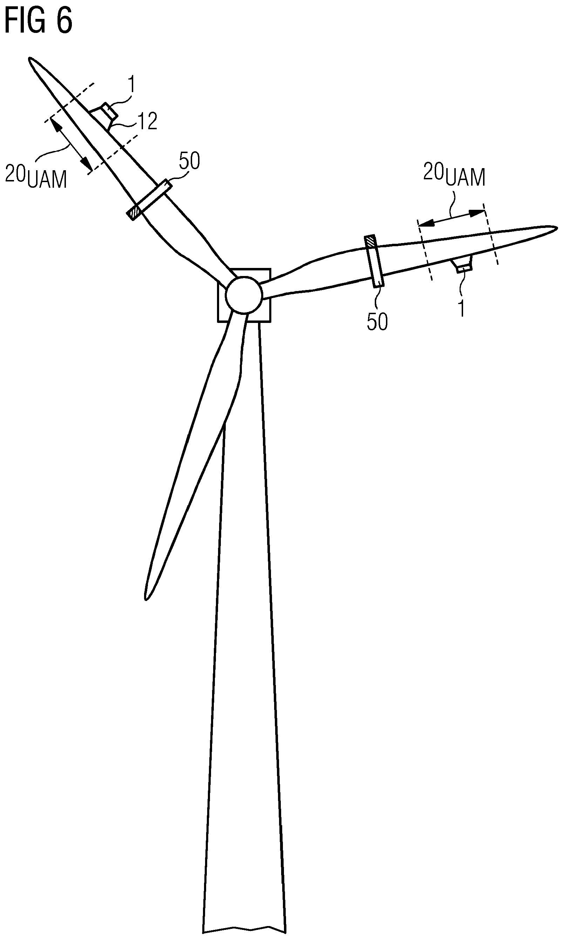

In a further stage, as illustrated in Figure 6, the prototype rotor blades 20test are augmented by such a leading-edge corrective mass 1, for example in an embodiment such as that described in Figure 3 above (equally, an embodiment as described in Figured 1 may be realized). The wind turbine is again operated to replicate the previously simulated conditions, with the aim of validating the effect of the leading-edge corrective mass 1 on a prototype rotor blade 20test. Once the effect of a leading-edge corrective mass has been verified, production of the rotor blade series can commence.

To improve the efficiency of the testing stage, or to allow for further adjustments in an installed rotor blade, a corrective mass can be moveably mounted in the interior of the rotor blade or at the exterior of the rotor blade. Preferably, the position of the corrective mass can be adjusted in response to commands issued remotely. Such an embodiment allows various test sequences to be carried out without the need for a technician to physically access the rotor blade exterior during a testing phase, since these manoeuvres are costly and hazardous and can only be performed in favourable weather conditions. Equally, such an embodiment allows further optimisation to the performance of an already installed rotor blade.

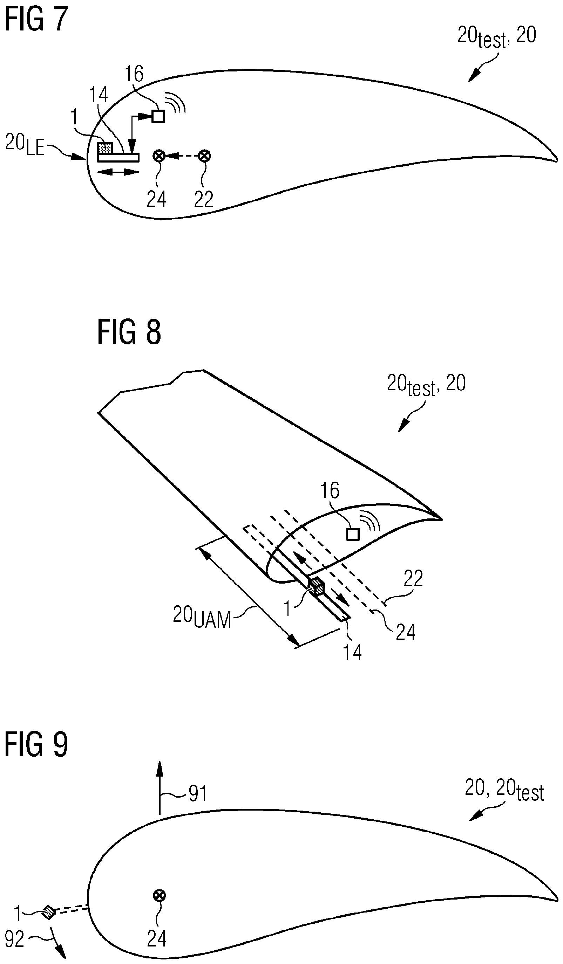

Figure 7 shows a rotor blade 20, 20test with a moveable leading-edge corrective mass 1. The corrective mass 1 is mounted on a track 14 in the interior of the airfoil, and can be moved back and forth in the chordwise direction in response to commands received over a communications interface, for example a wireless interface 16 as indicated here. Movement of the corrective mass 1 serves to shift the CoM relative to the leading edge 20LE as explained above.

Figure 8 shows a further rotor blade 20, 20test with a moveable leading-edge corrective mass 1. Here, the corrective mass 1 is mounted on a track 14 that allows the corrective mass 1 to be moved to and fro in the spanwise direction in response to commands received over a communications interface 16. In a similar manner, a leading-edge corrective mass can be moveably mounted at the exterior of the rotor blade, if its effectiveness is improved when located upstream of the leading edge.

The rotor blade geometry and the prevailing weather conditions at a wind turbine installation site may determine whether a leading-edge corrective mass may be installed in the airfoil interior or upstream of the leading edge.

Figure 9 illustrates the behaviour of the inventive rotor blade 20 or prototype rotor blade 20test during operating conditions that would otherwise result in the development of an unstable aeroelastic mode. The effect of a beginning "upward" or flapwise movement 91 of the airfoil in the critical spanwise section 20_{UAM} results in a corrective counteracting "nose-down" pitching movement 92 of the leading-edge corrective mass 1, so that an unstable aeroelastic mode cannot develop, and the aeroelastic behaviour of the overall rotor blade remains stable.

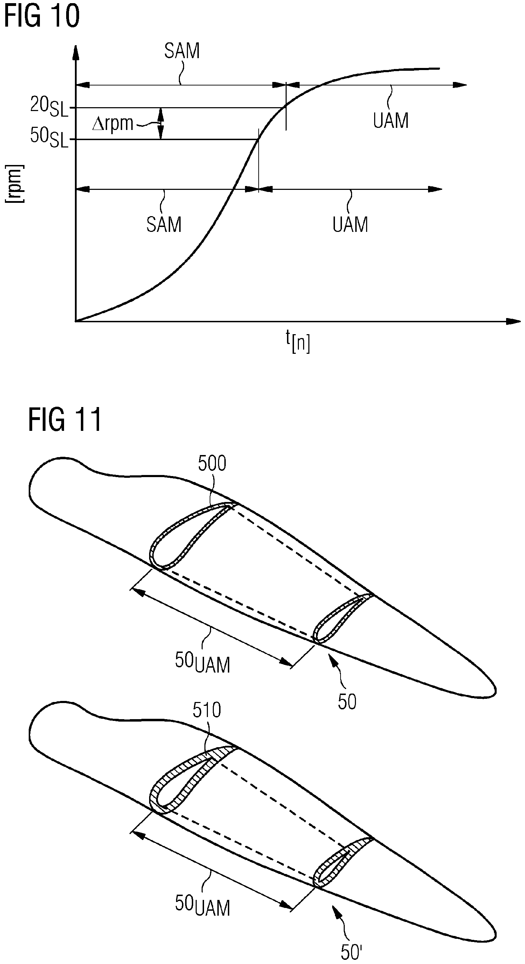

Figure 10 shows a curve of rotor speed (frequency of rotation, RPM, revolutions per minute) against time for a rotor blade installed on an operational wind turbine. It may be assumed that a rotor blade is operating under a certain set of parameters, for example, the wind speed and the pitch angle may be assumed to be constant. As long as the rotor speed does not exceed a certain threshold or stability limit, the rotor blade remains within a stable aeroelastic mode SAM and does not experience vibrations such as edge-wise flutter. However, if the rotor speed is increased above that threshold, the rotor blade enters an unstable aeroelastic mode in which vibrations are negatively damped. The amplitude of oscillation can be such that the rotor blade suffers material fatigue or even direct structural damage, resulting in costly repair procedures. A stability limit 50SL applies to a prior art rotor blade, and the wind turbine controller must ensure that the rotor speed is kept below this limit 50SL. However, the higher rotor speeds at or above that stability limit 50SL are associated with increased power output and valuable revenue. In the inventive rotor blade, the leading-edge corrective mass suppresses development of an unstable aeroelastic mode, so that a higher stability limit 20SL is achieved, allowing the inventive rotor blade to operate at the desirable higher rotor speeds without incurring fatigue or structural damage. The operator of a wind turbine equipped with the inventive rotor blades can therefore benefit from increased revenue.

Figure 11 shows a prior art rotor blade 50 susceptible to the occurrence of unstable aeroelastic modes, and another, equivalent prior art rotor blade 50' that has been adapted to avoid the occurrence of unstable aeroelastic modes by including additional mass in a spanwise section 50_{UAM} of the outboard region. The added mass is obtained by increasing the thickness 510 of the airfoil compared to the thickness 500 of the non-corrected rotor blade 50. The purpose of the added mass is to increase the rotor blade stiffness in that region. However, the added mass also affects the dynamic properties of the wind turbine, since it increases the total rotor blade mass resulting in a "mass moment penalty", i.e. an undesirable increase in edgewise blade loads, an undesirable increase in loads transferred to the hub, resulting in fatigue damage to the hub and pitch systems, etc. Another problem with this known approach lies in the inherent difficulty of correctly estimating the stability limit of a wind turbine during the design phase, i.e. the difficulty in predicting the performance of a rotor blade as part of an operational wind turbine. As a result, the added mass in the thicker body walls may not deliver the expected benefits and may even have an unforeseen adverse effect.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind turbine rotor blade (20) comprising
- an inboard region;
- an outboard region including a spanwise section (20_{UAM}) associated with the development of an unstable aeroelastic mode (UAM);
**characterized by**
- a leading-edge corrective mass (1) arranged within the spanwise section (20_{UAM}), which leading-edge corrective mass (1) is adapted to move the centre of mass (22) of the spanwise section (20_{UAM}) towards the leading edge (20_{LE}) in order to suppress the development of an unstable aeroelastic mode (UAM).

2. A wind turbine rotor blade according to the preceding claim, wherein the leading-edge corrective mass (1) is arranged at the exterior of the rotor blade (20).

3. A wind turbine rotor blade according to any of the preceding claims, comprising a mounting structure (12) for mounting the leading-edge corrective mass (1) to the rotor blade (20).

4. A wind turbine rotor blade according to any of the preceding claims, wherein the leading-edge corrective mass (1) is bonded to an outer surface (200) of the rotor blade (20) .

5. A wind turbine rotor blade according to the preceding claim, comprising a protective cover (20_{LEP}) applied over the leading-edge corrective mass (1).

6. A wind turbine rotor blade according to any of the preceding claims, wherein the leading-edge corrective mass (1) is embedded in the rotor blade body (20).

7. A wind turbine rotor blade according to any of the preceding claims, wherein the leading-edge corrective mass (1) comprises a material with a density of at least 10 g/cm³.

8. A wind turbine rotor blade according to any of the preceding claims, wherein the leading-edge corrective mass (1) has a shape corresponding to the shape of the curved leading edge (20_{LE}) of the rotor blade (20).

9. A wind turbine rotor blade according to any of the preceding claims, comprising a means (14, 16) of adjusting the position of a leading-edge corrective mass (1) relative to the centre of mass (22) of the spanwise section (20_{UAM}).

10. A wind turbine comprising a number of rotor blades (20) according to any of the preceding claims.

11. A method of manufacturing a wind turbine rotor blade (20), which method comprises the steps of
- identifying a spanwise section (20_{UAM}) associated with the development of an unstable aeroelastic mode (UAM) in an outboard region of the rotor blade (20);
- determining the properties and position of a leading-edge corrective mass (1) that will suppress the development of an unstable aeroelastic mode (UAM) in that spanwise section (20_{UAM}) ;
- providing such a leading-edge corrective mass (1); and
- arranging the leading-edge corrective mass (1) within that spanwise section (20_{UAM}).

12. A method according to the preceding claim, comprising a prototype testing stage with the steps of
- attaching a trailing-edge mass (30TE) to the trailing edge of a prototype rotor blade (20ₜₑₛₜ);
- mounting the prototype rotor blade (20ₜₑₛₜ) to the hub of a previously installed wind turbine (3); and
- adjusting operating parameters of the wind turbine (3) to develop an unstable aeroelastic mode (UAM) in the spanwise section (20_{UAM}) of the prototype rotor blade (20ₜₑₛₜ) .

13. A method according to claim 12, wherein properties of a leading-edge corrective mass (1) are determined from information collected during the prototype testing stage.

14. A method according to claim 12 or 13, wherein the leading-edge corrective mass (1) is moveably arranged in a chordwise direction of the rotor blade prototype (20ₜₑₛₜ) , and wherein the position of the leading-edge corrective mass (1) is adjusted during the prototype testing stage.

15. A method according to any of claims 12 to 14, wherein the leading-edge corrective mass (1) is moveably arranged in a spanwise direction of the rotor blade prototype (20ₜₑₛₜ) , and wherein the position of the leading-edge corrective mass (1) is adjusted during the prototype testing stage.
